# DEMANDE DE BREVET EUROPEEN

(11) **EP 3 581 437 A1**
(43) Date de publication de la demande: **18.12.2019**
(21) Numéro de dépôt: 19179089.8
(22) Date de dépôt: 07.06.2019
(51) Int. Cl.: B60R 13/02, B60N 3/02, B60J 5/04

(54) **PROCEDE DE FABRICATION D'UNE PORTE DE VEHICULE**

(30) Priorité: 13.06.2018 FR 1855149
(71) Demandeur: RENAULT s.a.s., 92100 Boulogne-Billancourt (FR)
(72) Inventeur: COUTURIER, Karl, 78650 BEYNES (FR)

(57) **Abrégé**

L'invention se rapporte à un procédé de fabrication d'une porte (1, 100) de véhicule comprenant une structure en tôle (2, 102), une garniture (3, 103), un bénitier (4, 104) d'accoudoir et une équerre (5, 105).

Selon l'invention, le procédé comprend les étapes suivantes :
- Une étape de fixation de l'équerre (105) sur la garniture (103),
- Une étape de solidarisation de l'ensemble constitué par la garniture (103) et l'équerre (105), à la structure en tôle (102),
- Une étape de fixation du bénitier (104) à l'équerre (105).

## Description

L'invention se rapporte à un procédé de fabrication d'une porte de véhicule.

Une porte de véhicule comprend généralement une structure en tôle, une garniture, et est dotée d'un bénitier d'accoudoir dans lequel passe la main d'un occupant pour ouvrir ou fermer la porte. Un tel bénitier doit pouvoir résister à un effort de fermeture de porte de 30kg. Par conséquent, ce bénitier est fixé par vissage à une équerre technique standard, qui a été préalablement solidarisée à ladite structure en tôle par clippage. De cette manière, un procédé de fabrication d'une porte de véhicule existant, comprend les principales étapes suivantes :
- Une étape de fixation de l'équerre à la structure en tôle par clippage,
- Une étape de solidarisation par clippage et par vissage de la garniture à ladite structure en tôle,
- Une étape de fixation par clippage du bénitier à ladite garniture,
- Une étape de vissage du bénitier sur l'équerre.

Or, il peut arriver que pour certains designs de porte de véhicule, il ne soit plus possible d'utiliser cette équerre technique standard.

Un procédé de fabrication selon l'invention, permet d'assembler de façon simple et rapide, une porte de véhicule, quel que soit son design.

L'invention a pour objet un procédé de fabrication d'une porte de véhicule comprenant une structure en tôle, une garniture, un bénitier de préhension et une équerre.

Selon l'invention, le procédé comprend les étapes suivantes :
- Une étape de fixation de l'équerre sur la garniture,
- Une étape de solidarisation de l'ensemble constitué par la garniture et l'équerre, à la structure en tôle,
- Une étape de fixation du bénitier à l'équerre.

Autrement dit, la principale originalité d'un procédé selon l'invention est que l'équerre est fixée préalablement à la garniture, pour former un ensemble autonome, qui est directement transportable et manipulable, pour être ensuite monté sur la structure en tôle de la porte. La réalisation de cet ensemble peut donc s'effectuer dans un endroit à part, qui peut être éloigné d'une chaine d'assemblage d'un véhicule, empêchant de multiplier les pièces le long de ladite chaine, qui peuvent être une source d'encombrement et de désordre le long de ladite chaine d'assemblage. De plus, en montant directement l'équerre sur la garniture, on s'affranchit de certains problèmes d'accessibilité pouvant être rencontrés lorsque tous les éléments de la porte sont montés sur place. Préférentiellement, les étapes d'un procédé selon l'invention, sont réalisées dans l'ordre dans lequel elles ont été mentionnées ci-avant.

Avantageusement, un procédé selon l'invention comprend une étape d'arrimage de l'équerre à la structure en tôle de la porte, une fois que l'ensemble constitué par ladite garniture et par ladite équerre a été constitué. De cette manière, l'ensemble constitué par la garniture et l'équerre comprend au moins un point de fixation à la structure en tôle de la porte, qui est situé au niveau de l'équerre.

De façon préférentielle, l'étape d'arrimage de l'équerre à la structure en tôle de la porte s'effectue par vissage.

Préférentiellement, un procédé selon l'invention comprend une étape de solidarisation de la garniture à la structure en tôle de la porte, une fois que l'ensemble constitué par ladite garniture et par ladite équerre a été constitué. De cette manière, l'ensemble constitué par la garniture et l'équerre comprend au moins un point de fixation à la structure en tôle de la porte, qui est situé au niveau de la garniture.

De façon préférentielle, l'étape de solidarisation de la garniture à la structure en tôle de la porte s'effectue par vissage et par clippage. Le clippage permet de prépositionner correctement la garniture par rapport à la structure en tôle, et d'assurer un premier niveau de fixation de ladite garniture à ladite structure en tôle. Le vissage vient ensuite assurer un deuxième niveau de fixation, qui est robuste et invariable dans le temps.

Avantageusement, l'étape de fixation de l'équerre à la garniture est réalisée par clippage. De cette manière, le montage de l'ensemble constitué par la garniture et l'équerre s'effectue facilement et rapidement, sans avoir recourt à un outillage particulier et/ou à des manipulations compliquées.

De façon préférentielle, l'étape de fixation du bénitier à l'équerre s'effectue par vissage. Puisque le bénitier est amené à subir des efforts élevés, sa solidarisation à l'équerre qui est sensé le soutenir, doit être étroite et robuste.

L'invention a pour autre objet une équerre pour la réalisation d'un procédé conforme à l'invention.

Selon l'invention, l'équerre comprend :
- Une première zone d'accroche comprenant une vis et destinée à fixer ladite équerre à la structure en tôle,
- Une deuxième zone d'accroche destinée à la fixation du bénitier à ladite équerre,
- Une troisième zone d'accroche comprenant un clip saillant et destinée à la fixation de ladite équerre à la garniture.

De cette manière, grâce à la troisième zone d'accroche sous la forme d'un clip, ladite équerre est apte à être fixée par clippage à la garniture. Une telle équerre est conçue pour être fixée à la structure en tôle de la porte, à la garniture de porte et au bénitier.

Avantageusement, la première zone d'accroche est délimitée par un premier plan d'interface et la deuxième zone d'accroche est délimitée par un deuxième plan d'interface, ledit premier plan et ledit troisième plan étant perpendiculaires. Le premier plan d'interface est destiné à venir au contact d'une face de la structure en tôle et le deuxième plan d'interface est destiné à venir au contact d'une face du bénitier. De cette manière, une fois montée dans la porte, l'équerre sera bloquée en translation dans deux directions de l'espace, l'une selon une direction transversale du véhicule et l'autre selon un axe vertical dudit véhicule.

De façon préférentielle, une équerre selon l'invention est constituée par une pièce allongée, et en ce que la première zone d'accroche et la troisième zone d'accroche constituent les deux extrémités de ladite pièce, considérées suivant un axe longitudinal de ladite pièce. De cette manière, l'équerre sera insérée entre la garniture de porte et la structure en tôle de ladite porte, et sera assimilable à une entretoise.

Un procédé de montage selon l'invention présente l'avantage d'être simplifié par rapport aux procédés existants, car l'étape de constitution de l'ensemble composé par la garniture et l'équerre, peut s'effectuer à part sans venir s'ajouter systématiquement aux autres étapes de la fabrication de la porte. Il en résulte qu'il est plus performant que lesdits procédés existants. Il a de plus l'avantage, grâce à cette étape qui peut être réalisée à part, d'alléger une chaine d'assemblage d'un véhicule, en limitant le nombre d'outils et de dispositifs de stockage des pièces et des outils, nécessaires à la fabrication de la porte.

On donne, ci-après, une description détaillée d'un mode de réalisation préféré d'un procédé de fabrication selon l'invention, en se référant aux figures suivantes :
- La figure 1 est une vue en perspective d'une porte de véhicule selon l'état de la technique,
- La figure 2 est une vue en perspective d'une équerre selon l'état de la technique,
- La figure 3 est une vue en perspective d'un ensemble comprenant une garniture et une équerre pour la fabrication d'une porte selon l'invention,
- La figure 4 est vue en perspective d'une zone d'une porte montée au moyen d'un procédé selon l'invention, ladite zone comprenant une équerre, un bénitier et une garniture de porte,
- La figure 5, est une vue de face et en transparence d'une zone d'une porte montée au moyen d'un procédé selon l'invention, ladite zone comprenant une équerre, un bénitier, une garniture de porte et une structure en tôle,
- Les figures 6A et 6B sont deux vues en perspective et sous deux angles différents, d'une équerre selon l'invention.

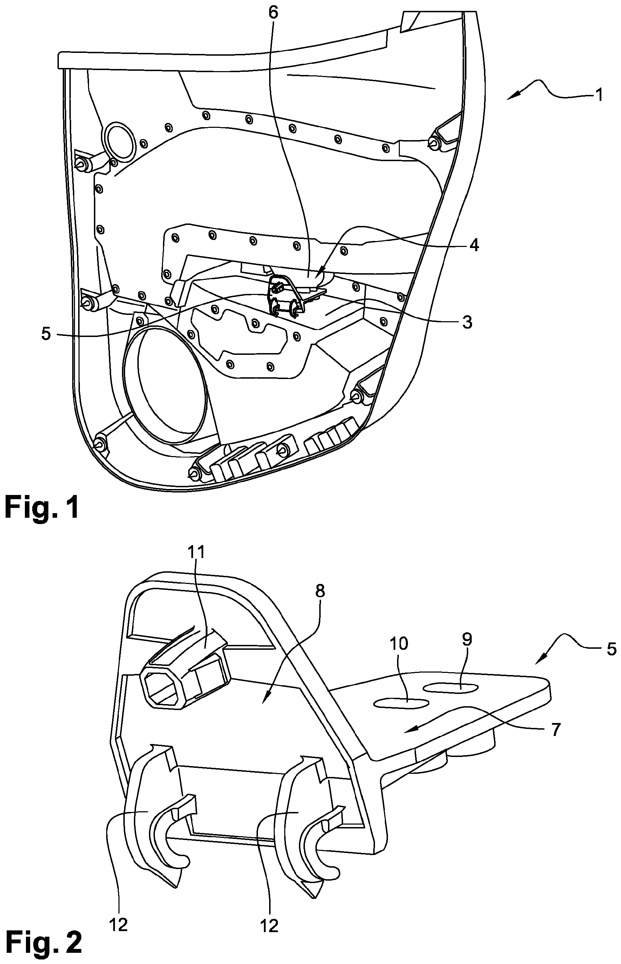

En se référant à la figure 1, une porte 1 de véhicule comprend schématiquement une structure en tôle, une garniture 3, un bénitier 4 de préhension d'un accoudoir et une équerre 5 standard destinée à soutenir ledit bénitier 4. En effet, le bénitier 4 de l'accoudoir comprend une paroi 6 délimitant une cavité dans laquelle est susceptible de venir s'insérer la main d'un occupant, dans le but de manipuler la porte 1, soit pour l'ouvrir, soit pour la fermer. Ce bénitier 4 devant résister à un effort de fermeture de porte de 30 kg, il doit être fixé à l'équerre 5 standard, dont la géométrie et les dimensions sont prévues pour supporter efficacement ledit bénitier 4.

En effet, en se référant à la figure 2, l'équerre 5 comprend schématiquement une embase principale 7 plane et de faible épaisseur, prolongée par un segment plan 8 et de faible épaisseur. Le segment 8 est incliné par rapport à la base plane 7. L'embase principale 7 possède deux ouvertures 9, 10 destinées au passage de deux vis afin d'assurer la fixation du bénitier 4 à l'équerre 5. Le segment incliné 8 possède des éléments 11, 12 permettant de fixer par clippage et par vissage l'équerre 5 à la structure en tôle 2 de la porte 1.

Un procédé de l'état de la technique permettant de fabriquer une telle porte 1 comprend les étapes suivantes :
- Une étape de fixation de l'équerre 5 à la structure en tôle 2 par clippage 11, 12,
- Une étape de solidarisation par clippage et par vissage de la garniture 3 à ladite structure en tôle 2,
- Une étape de fixation par clippage du bénitier 4 à ladite garniture 3,
- Une étape de vissage du bénitier 4 sur l'équerre 5.

Toutefois, l'équerre 5 standard utilisée pour le montage d'un type de porte 1, n'est pas forcément utilisable pour le montage de portes ayant des designs variés. Il en résulte que le procédé précédent n'est pas applicable au montage de tout type de porte.

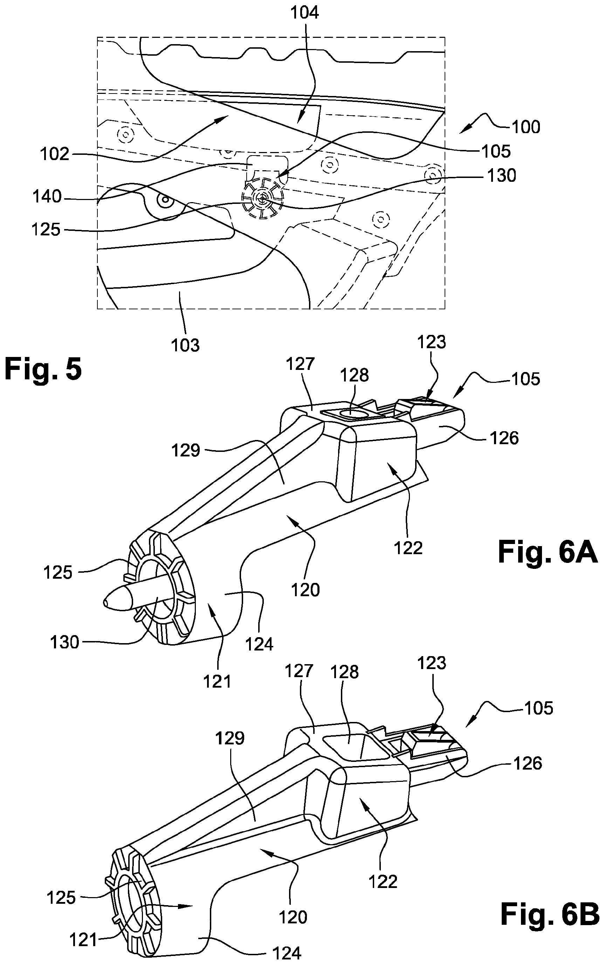

En se référant aux figures 6A et 6B, un procédé selon l'invention, permettant de fabriquer une porte 100 ayant un design varié, met en oeuvre une équerre 105, dont la géométrie a été modifiée par rapport à celle d'une équerre existante 5. Cette équerre 105 présente schématiquement un corps allongé 120, dont une extrémité correspond à une première zone d'accroche 121 et dont une autre extrémité correspond à une troisième zone d'accroche 123. Ces deux extrémités doivent être considérées par rapport à un axe longitudinal de l'équerre 105. La première zone d'accroche 121 est constituée par une pièce cylindrique creuse 124 se terminant par un plan d'interface 125 destiné à venir au contact d'une surface plane de la structure en tôle 102 de la porte 100. La troisième zone d'accroche 123 est constituée par patte saillante 126 formant un clip, et apte à coopérer avec une ouverture de la garniture 103 de porte 100, pour permettre à l'équerre 105 d'être fixée par clippage à ladite garniture 103. L'équerre 105 présente une protubérance 140 latérale creuse correspondant à une deuxième zone d'accroche 122. Cette protubérance 140 est de forme parallélépipédique et possède sur l'une de ses faces 127 une ouverture 128 pour le passage d'une vis, afin de fixer le bénitier 104 d'un accoudoir à ladite équerre 105. La face 127 possédant l'ouverture 128 constitue un plan d'interface destiné à venir au contact d'une face du bénitier 104. Ce plan d'interface 127 est perpendiculaire au plan d'interface 125 de la première zone d'accroche 121. L'équerre 105 comprend également un bras 129 s'étendant suivant un axe longitudinal de ladite équerre 105, et reliant la protubérance 140 latérale à la pièce cylindrique creuse 124 formant la première zone d'accroche 121. Ce bras 129 présente une section transversale sensiblement rectangulaire, qui est maximale au niveau de la protubérance 140 et qui décroit progressivement en se rapprochant de la première zone d'accroche 121 pour devenir nulle au niveau de ladite première zone d'accroche 121.

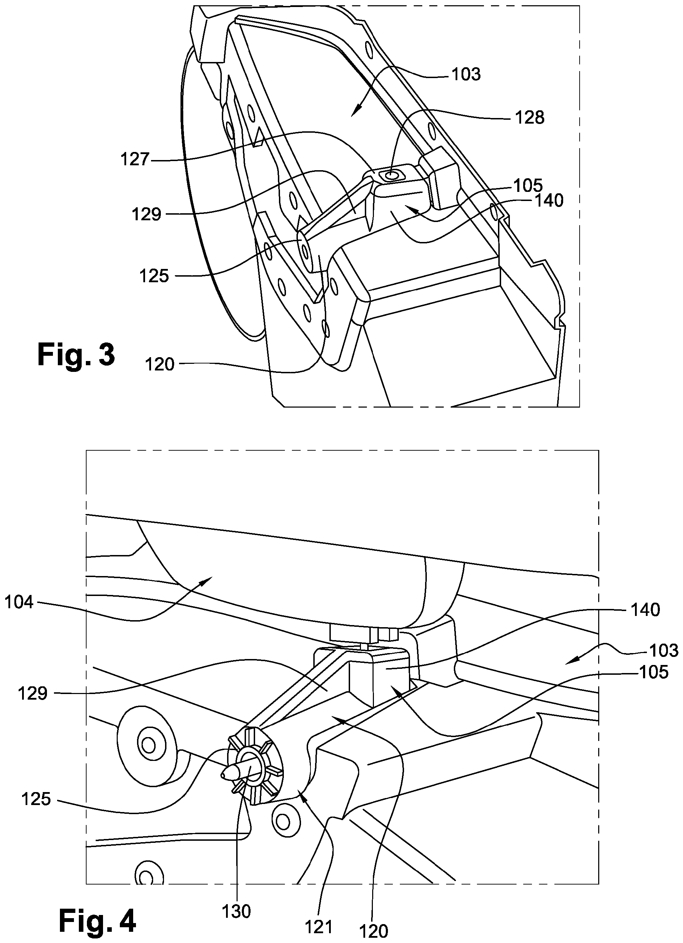

Un procédé de fabrication d'une porte 100 selon l'invention implique l'équerre 105 modifiée décrite ci-avant, et comprend les étapes suivantes :
- Une étape de fixation de l'équerre 105 sur la garniture 103 comme illustré à la figure 3. Cette étape est réalisée par clippage au niveau de la troisième zone d'accroche 123 de l'équerre 105. Présentement, la garniture 102 délimite un fond de bac. Une fois que l'équerre 105 a été fixée à la garniture 103, ces deux éléments 103, 105 forment un ensemble autonome, qui peut être transporté et manipulé de façon indépendante afin d'être monté sur la porte 100,
- Une étape de solidarisation de l'ensemble constitué par la garniture 103 et l'équerre 105, à la structure en tôle 102. Cette solidarisation s'effectue, d'une part au niveau de l'équerre 105, et d'autre part au niveau de la garniture 103. En effet, cet ensemble est fixé à la structure en tôle 102, au niveau de la première zone d'accroche 121 de l'équerre 105, cette fixation s'effectuant par l'intermédiaire d'une vis 130 saillant de la pièce cylindrique creuse 124 de la première zone d'accroche 121, comme illustré aux figures 4, 5 et 6A. Cet ensemble est également fixé à la structure en tôle 102 au niveau de la garniture 103, par clippage et par vissage comme l'illustre la figure 4.
- Une étape de fixation du bénitier 104 de l'accoudoir à l'équerre 105, au niveau de la deuxième zone d'accroche 122 de ladite équerre 105 comme illustré aux figures 4 et 5. Cette fixation est réalisée par l'intermédiaire d'une vis traversant l'ouverture 128 de la protubérance 126 de ladite deuxième zone d'accroche 122.

## Revendications

1. Procédé de fabrication d'une porte (1, 100) de véhicule comprenant une structure en tôle (2, 102), une garniture (3, 103), un bénitier (4, 104) d'accoudoir et une équerre (5, 105), **caractérisé en ce qu'**il comprend les étapes suivantes :
- Une étape de fixation de l'équerre (105) sur la garniture (103),
- Une étape de solidarisation de l'ensemble constitué par la garniture (103) et l'équerre (105), à la structure en tôle (102),
- Une étape de fixation du bénitier (104) à l'équerre (105).

2. Procédé de fabrication selon la revendication 1, **caractérisé en ce qu'**il comprend une étape d'arrimage de l'équerre (105) à la structure en tôle (102) de la porte (100), une fois que l'ensemble constitué par ladite garniture (103) et par ladite équerre (105) a été constitué.

3. Procédé de montage selon la revendication 2, **caractérisé en ce que** l'étape d'arrimage de l'équerre (105) à la structure en tôle (102) de la porte (100) s'effectue par vissage.

4. Procédé de fabrication selon l'une quelconque des revendications 1 à 3, **caractérisé en ce qu'**il comprend une étape de solidarisation de la garniture (103) à la structure en tôle (102) de la porte (100), une fois que l'ensemble constitué par ladite garniture (103) et par ladite équerre (105) a été constitué.

5. Procédé de fabrication selon la revendication 4, **caractérisé en ce que** l'étape de solidarisation de la garniture (103) à la structure en tôle (102) de la porte (100) s'effectue par vissage et par clippage.

6. Procédé de fabrication selon l'une quelconque des revendication 1, **caractérisé en ce que** l'étape de fixation de l'équerre (105) à la garniture (103) est réalisée par clippage.

7. Procédé de fabrication selon l'une quelconque des revendications 1 à 6, **caractérisé en ce que** l'étape de fixation du bénitier (104) à l'équerre (105) s'effectue par vissage.

8. Equerre pour la réalisation d'un procédé conforme à l'une quelconque des revendications 1 à 7, **caractérisée en ce qu'**elle comprend :
- Une première zone d'accroche (121) comprenant une vis (130) et destinée à fixer ladite équerre (105) à la structure en tôle (102),
- Une deuxième zone d'accroche (122) destinée à la fixation du bénitier (104) à ladite équerre (105),
- Une troisième zone d'accroche (123) comprenant un clip saillant (126) et destinée à la fixation de ladite équerre (105) à la garniture (103).

9. Equerre selon la revendication 8, **caractérisée en ce que** la première zone d'accroche (121) est délimitée par un premier plan d'interface (125) et la deuxième zone d'accroche (122) est délimitée par un deuxième plan d'interface (127), et **en ce que** ledit premier plan (125) et ledit deuxième plan (127) sont perpendiculaires.

10. Equerre selon l'une quelconque des revendications 8 ou 9, **caractérisée en ce qu'**elle est constituée par une pièce allongée, et **en ce que** la première zone d'accroche (121) et la troisième zone d'accroche (123) constituent les deux extrémités de ladite pièce, considérées suivant un axe longitudinal de l'équerre (105).
